# EUROPEAN PATENT SPECIFICATION

(11) **EP 3 489 146 B1**
(45) Date of publication and mention of the grant of the patent: **30.03.2022**
(21) Application number: 17382795.7
(22) Date of filing: 24.11.2017
(51) Int. Cl.: B64D 27/26

(54) **AIRCRAFT WITH A SYSTEM FOR REARWARD MOUNTING AND DISMOUNTING AN ENGINE AND METHOD FOR REARWARD DISMOUNTING AN ENGINE**
FLUGZEUG MIT EINEM SYSTEM ZUR RÜCKWÄRTIGEN MONTAGE UND DEMONTAGE EINES MOTORS UND VERFAHREN ZUR RÜCKWÄRTIGEN DEMONTAGE EINES MOTORS
AÉRONEF AYANT UN SYSTÈME DE MONTAGE ET DÉMONTAGE ARRIÈRE DE MOTEUR ET MÉTHODE DE DÉMONTAGE D'UN MOTEUR PAR L'ARRIÈRE

(43) Date of publication of application: 29.05.2019
(73) Proprietor: Airbus Operations, S.L., 28906 Getafe Madrid (ES)
(72) Inventor: ARANA HIDALGO, Alberto, 28906 Getafe (Madrid) (ES); MARTÍNEZ MUÑOZ, José Luis, 28906 Getafe (Madrid) (ES)
(74) Representative: Elzaburu S.L.P.

(56) References cited:
- GB-A- 1 070 883
- US-A- 2 944 331
- US-A- 2 944 766
- US-A- 3 194 515
- okrajoe: "HD Video of F-16 Fighter Jet Engine Removal", , 25 January 2014 (2014-01-25), XP054978080, Retrieved from the Internet: URL:HTTPS://WWW.YOUTUBE.COM/WATCH?V=GIT97I JN9TS [retrieved on 2018-01-24]

## Description

### Field of the invention

This invention refers to an aircraft with a system for mounting and dismounting an engine from the airframe in a rearward direction. The invention also refers to a method for rearward dismounting an engine from an aircraft.

### Background of the invention

Currently the engines of an aircraft are usually taken to their final location in the rear fuselage of the airframe by means of a vertical lifting/lowering of the engine to match the mount fixtures where the engine is fixed.

This vertical lifting/lowering (vertical insertion or extraction) is done by means of elevators or assisted by electrical hoist kits attached to auxiliary lugs or fittings within the airframe. This vertical operation requires an open structure at the bottom of the fuselage (a maintenance door) large enough to allow the engine to lift without change in attitude (i.e., without a change in the angle of the engine with respect to the ground).

This open space thus reduces the structural capability of the fuselage and requires a maintenance door.

Some prior art documents disclose the installation of heavy equipment (such as an aircraft Auxiliary Power Unit (APU) or an engine) from the rear side of the aircraft.

US 8262050 B2, referred to a "method and apparatus for mounting and dismounting an aircraft engine", discloses a method that includes mounting a frame assembly in supported connection with a support member of an associated aircraft. The frame assembly includes a frame member, a movable assembly mounted in movable relationship to the frame member, and a plurality of engine winches mounted in supported connection with the movable member. Each engine winch has an associated engine cable operably connected thereto. The movable assembly is movable between forward and rearward positions. The method further includes supporting the weight of at least a portion of an aircraft engine with the engine cables and moving the movable member relative to the frame member to displace the portion of the aircraft engine.

EP 3181458 A1 refers to a suspension system for an aircraft auxiliary power unit located in a fuselage structure, the system comprising a plurality of auxiliary power unit attachment brackets arranged to be attached to the auxiliary power unit, a plurality of fuselage attachment brackets attached to the auxiliary power unit attachment brackets and coupled to the fuselage structure, and additionally comprising two longitudinal elements arranged to be attached to the fuselage structure in the longitudinal direction of the aircraft for supporting the auxiliary power unit, the two longitudinal elements and the plurality of fuselage attachment brackets being connected such that the two longitudinal elements support the plurality of fuselage attachment brackets, being the fuselage attachment brackets slidably movable along the longitudinal elements for introducing or extracting the auxiliary power unit into the fuselage structure.

US 2944766 A refers to an aircraft engine installation wherein an engine is mounted in the tail portion of the fuselage. Said aircraft has a vertical stabilizer and said fuselage in said tail portion is longitudinally divided to the rear end of the fuselage providing an upper fuselage portion including said vertical stabilizer hingedly movable to one side from normal position to a position exposing said engine; it comprises a pair of tracks supported by the fuselage and disposed at the sides of the engine and rollers on said engine operable to bear on said tracks for support said engine in removal from the fuselage. The major portion of said tracks extends generally horizontally and longitudinally of said fuselage and a minor portion of said tracks that said rollers strike in initial rearward motion slope upwardly and rearwardly, whereby said engine is lifted to an upper position into the open space provided by the movement of said upper fuselage portion to one side. Said aircraft has a series of supply and control lines to said engine having connections with said engine permitting said lines to remain connected in said upper engine position, whereby part of the engine systems can be operated during maintenance and repair operations in said upper engine position, said engine being removable by further rearward movement from said upper engine position

### Summary of the invention

Accordingly, the object of the present invention is to provide an aircraft with a system for rearward mounting and dismounting an engine in which the operations of insertion and extraction of the engine are simplified without needing a bottom maintenance door on the fuselage.

The invention provides an aircraft with a system for rearward mounting and dismounting an engine, the engine being placed inside the rear part of the aircraft when mounted, and the system for rearward mounting and dismounting the engine comprising:
- first removable attachment means arranged to attach the engine to the fuselage in the rear part of the aircraft,
- internal supports fixed in the rear part of the aircraft,
- at least two longitudinal detachable rails, to be placed on the internal supports and under the engine, and
- sliding means with second removable attachment means,
the fuselage comprising windows for accessing the first removable attachment means and the second removable attachment means,
wherein the sliding means are configured to be entered into the rear part of the aircraft, to be placed on the longitudinal detachable rails and to be attached to the engine by means of the second removable attachment means.

The system for rearward mounting and dismounting the engine makes the operations of insertion and extraction of the engine easier, regardless of whether the engine is placed horizontally or at an angle with respect to the ground, and avoids making additional openings in the fuselage.

According to another aspect, the invention provides a method for rearward dismounting an engine from the above-described aircraft that comprises the following steps:
- removing the tailcone or a fairing from the rear part of the aircraft,
- entering the longitudinal detachable rails into the rear part of the aircraft, and placing the longitudinal detachable rails on the internal supports and under the engine,
- entering the sliding means into the rear part of the aircraft, placing the sliding means on the longitudinal detachable rails, and attaching the sliding means to the engine by means of second removable attachment means,

- disengaging the engine from the rear part of the aircraft by detaching the first attachment means,
- rearward sliding of the sliding means and the engine on the longitudinal detachable rails,
- transferring the engine onto an external fork-lift or trolley, and
- disengaging the engine from the sliding means by detaching the second removable attachment means.

According to another aspect, the invention provides a method for rearward dismounting an engine from the above-described aircraft that comprises the following steps:
- attaching a pulley to the engine through a window,
- removing the tailcone or a fairing from the rear part of the aircraft,
- entering the longitudinal detachable rails into the rear part of the aircraft, and placing the longitudinal detachable rails on the internal supports and under the engine,
- entering the sliding means into the rear part of the aircraft, placing the sliding means on the longitudinal detachable rails, and attaching the sliding means to the engine by means of second removable attachment means,
- disengaging the engine from the rear part of the aircraft by detaching the first attachment means,
- rearward sliding of the sliding means and the engine on the longitudinal detachable rails, controlled by the pulley,
- transferring the engine onto an external fork-lift or trolley,
- detaching the pulley from the attachment points at the front of the engine, and
- disengaging the engine from the sliding means by detaching the second removable attachment means.

Other characteristics and advantages of the present invention will be clear from the following detailed description of several embodiments illustrative of its object in relation to the attached figures.

### Brief description of the drawings

Figure 1 is a perspective view of an aircraft with its fuselage.
Figure 2 is a view of the rear part of the aircraft of Figure 1, including its tailcone.
Figure 3A and 3B are side views of the rear part of an aircraft of the prior art with an engine mounted on it (Figure 3A), which can be dismounted vertically (Figure 3B).
Figures 4A and 4B correspond to two views of a cross section of the rear part of the aircraft, with the engine and several elements of the system for rearward mounting and dismounting an engine.
Figures 5 to 10 show a side view of the rear part of the aircraft, with the engine and the system for rearward mounting and dismounting an engine during the steps of the process of rearward dismounting of the engine.
Figures 11 to 18 show a side view of the rear part of the aircraft, with the engine placed at an angle with respect to the ground and the system for rearward mounting and dismounting an engine during the steps of the process of rearward dismounting of the engine.

### Detailed description of the invention

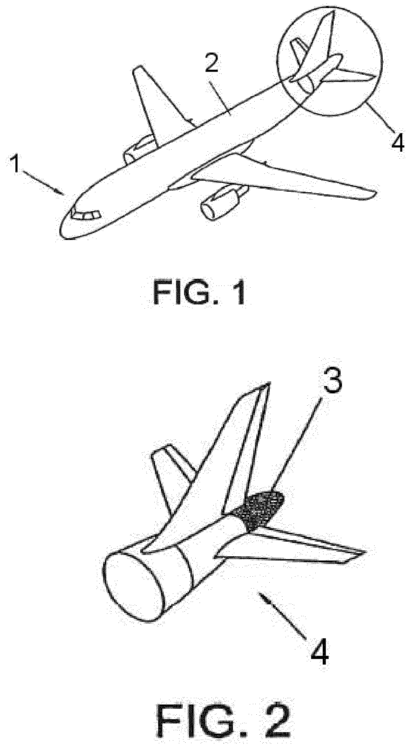

Figure 1 shows an aircraft 1 of the invention with its aircraft fuselage 2, and figure 2 shows, more in detail, the rear part 4 of the aircraft 1 of figure 1, including the tailcone 3.

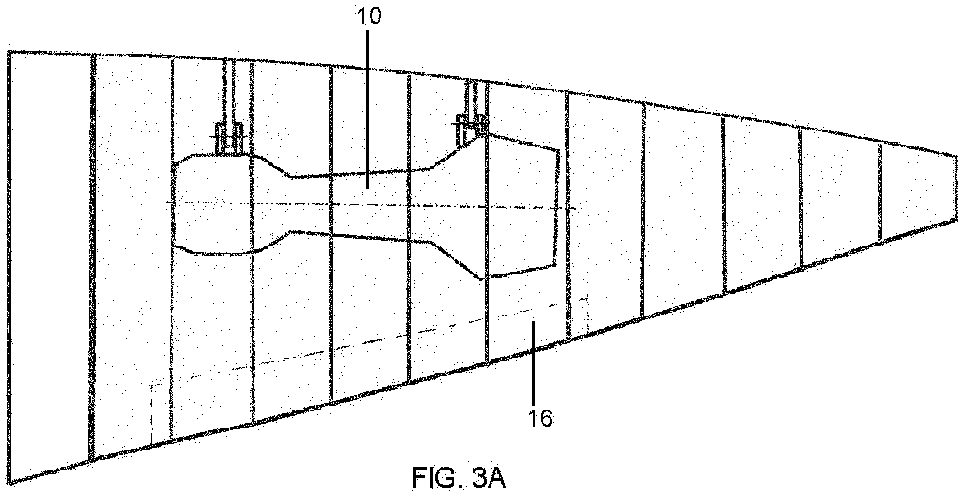

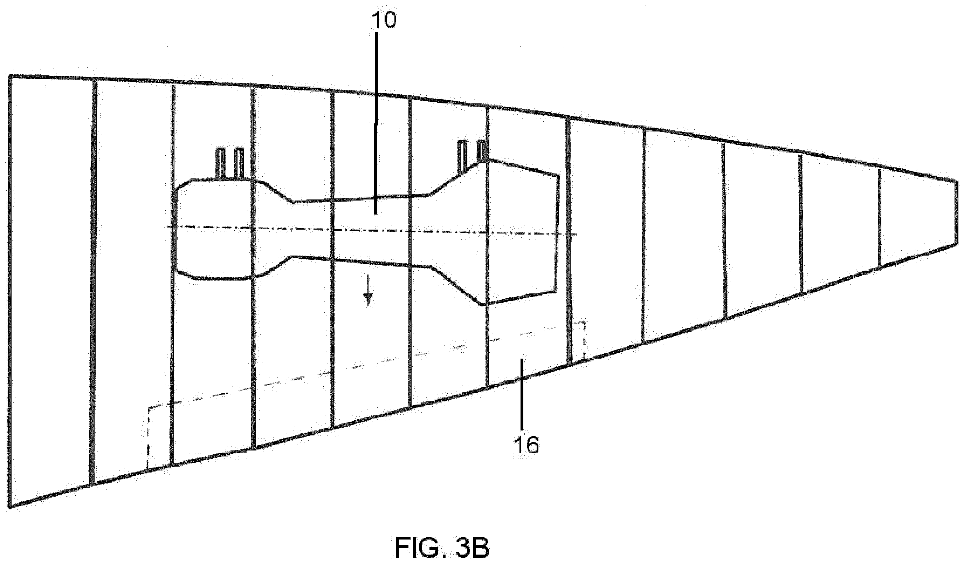

Figure 3A is a side view of the rear part of an aircraft of the prior art with an engine 10 mounted on it, which can be dismounted vertically (as shown in Figure 3B). As shown in these figures, the fuselage 2 has a bottom maintenance door 16 needed for the vertical lifting/lowering of the engine 10.

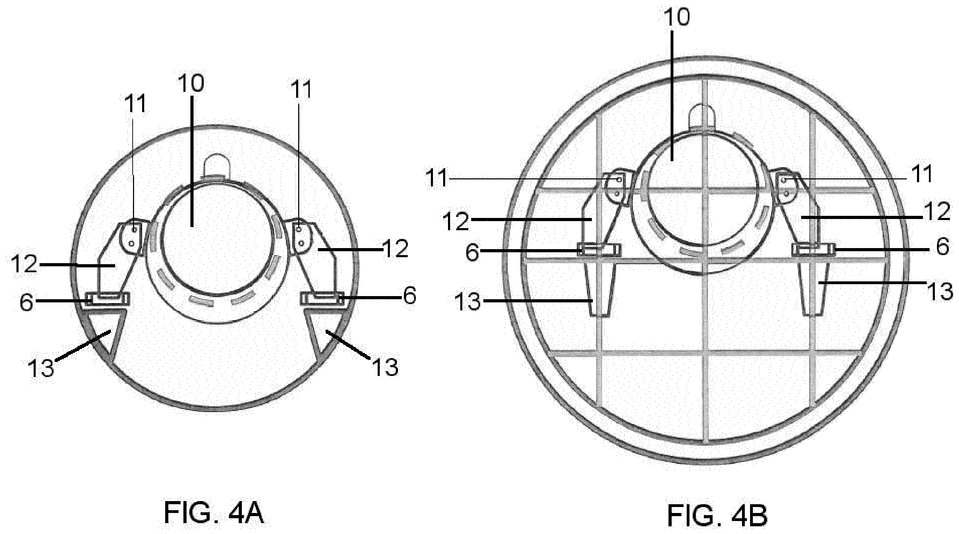

Figure 4A is a cross section of the rear part 4 of the aircraft 1, showing the engine 10 placed horizontally inside the aircraft fuselage 2. This figure also shows some elements of the system for rearward mounting and dismounting the engine 10, such as internal supports 13 fixed in the rear part 4 of the aircraft 1, two longitudinal detachable rails 6, to be placed on the internal supports 13 and under the engine 10, and sliding means 12 for attachment to the engine by means of second removable attachment means 11, to be placed on the longitudinal detachable rails 6.

Figure 4B is a cross section of the rear part 4 of the aircraft 1, when the engine 10 is placed inside the aircraft fuselage 2 at an angle with respect to the ground (i.e., not horizontally).

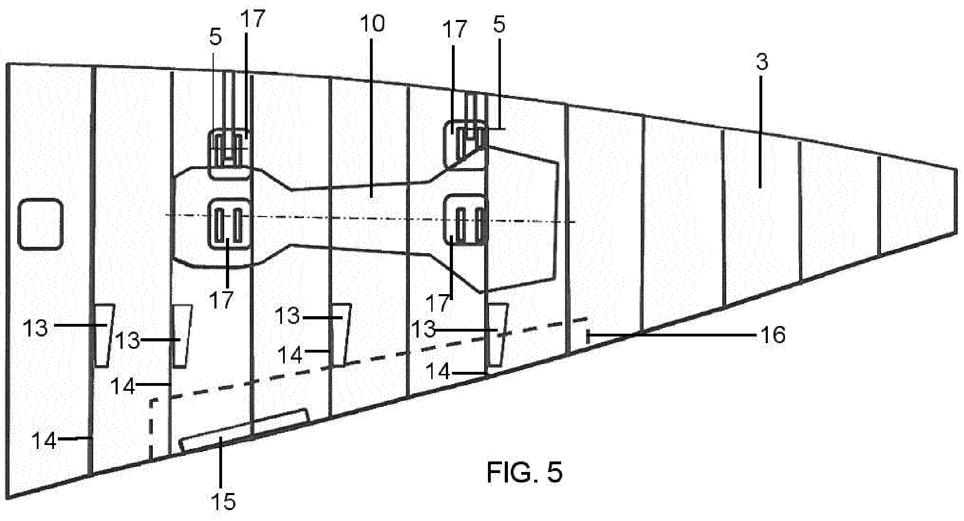

Figures 5 to 10 show a side view of the rear part 4 of the aircraft 1, with the engine 10 and the system for rearward mounting and dismounting an engine during the steps of the process of rearward dismounting of the engine.

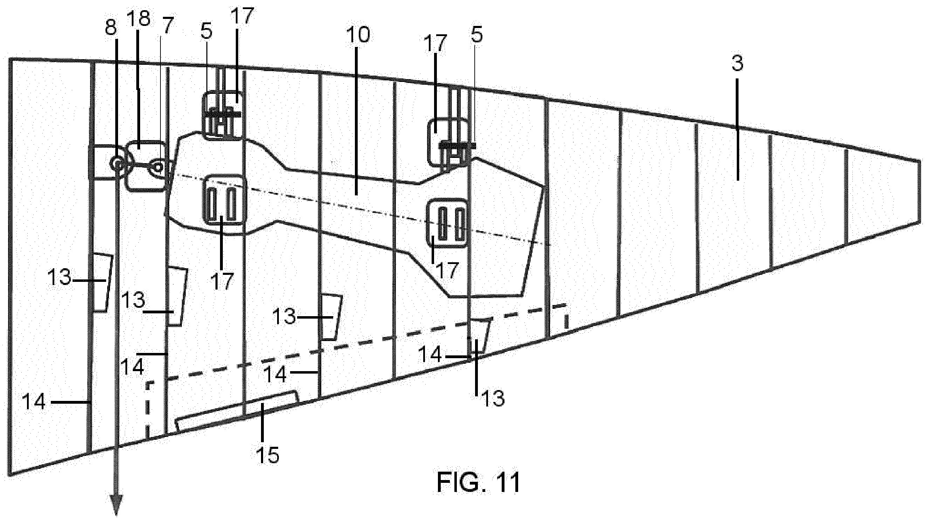

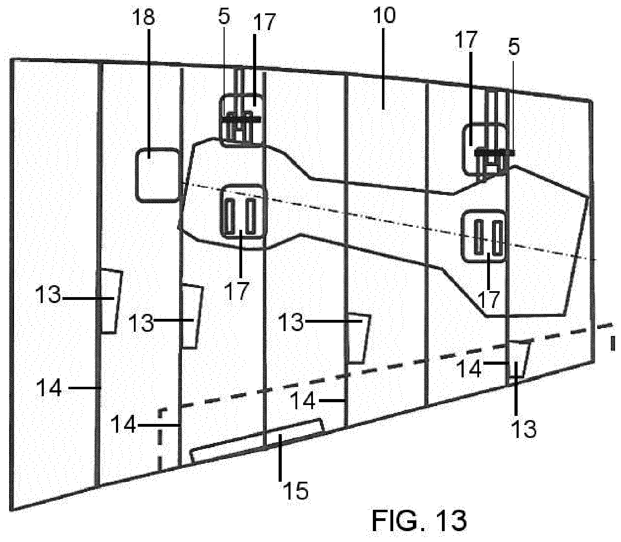

In Figures 5 to 10 the engine 10 is placed horizontally (i.e., horizontal to the ground when the aircraft 1 is on the ground). However, it is possible that the engine 10 is placed at an angle with respect to the ground when the aircraft 1 is on the ground (Figures 11 to 18).

The longitudinal detachable rails 6 are not integral part of the structure of the aircraft 1, and do not perform a function of stabilization or strengthening of the fuselage structure. They serve to support the engine 10 when it slides on them after the removable attachment means 5 are detached.

Figures 11 to 12 show a pulley 8 attached to the fuselage 2 of the aircraft 1 and connected to the attachment points 7 on the front of the engine 10 to allow the sliding of the engine 10 on the detachable rails 6 in a controlled manner. This pulley 8 is another element of the system for rearward mounting and dismounting the engine 10.

The pulley 8 may be an electrical pulley, and it can be of the same type as those currently used to raise/lower the engines. The motor of the electrical pulley can be placed outside the aircraft 1.

In Figures 5 to 18, the fuselage 2 comprises windows 17 for accessing the first removable attachment means 5 and the second removable attachment means 11. In these figures it can also be seen that the service door 15 at the bottom of the fuselage is considerably smaller than the maintenance door 16 of the prior art aircraft (represented in dashed line).

The fuselage 2 also comprises a window 18 for accessing the attachment points 7 at the front of the engine 10 when the engine 10 is mounted. Accordingly, this window 18 makes it possible for the operator to attach the pulley 8 to the attachments points 7 on the front of the engine 10.

The detachable rails 6, the sliding means 12 and the second removable attachment means 11 are not placed in the rear part 4 of the aircraft 1 when the engine 10 is mounted, which allows a reduction of weight during the flight.

The supports 13 may be fixed to the bulkheads 14 inside the rear part 4 of the aircraft 1

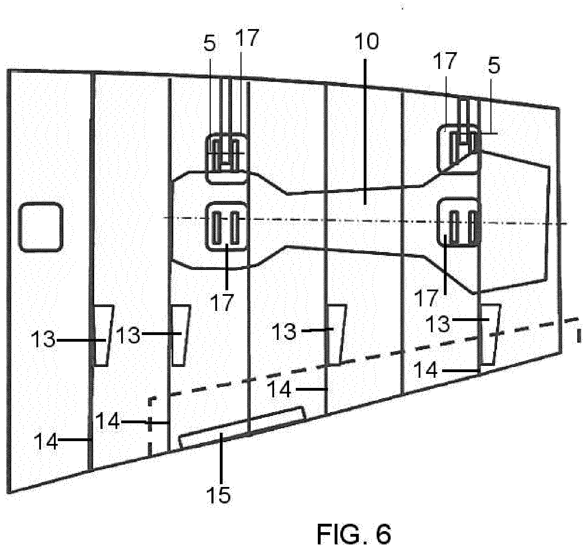

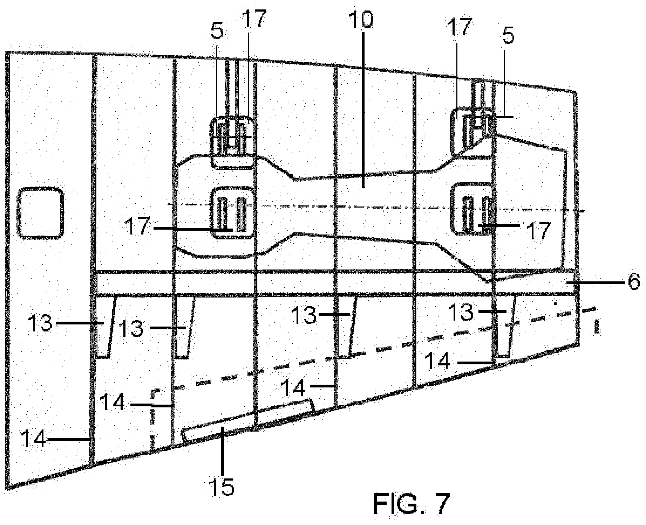

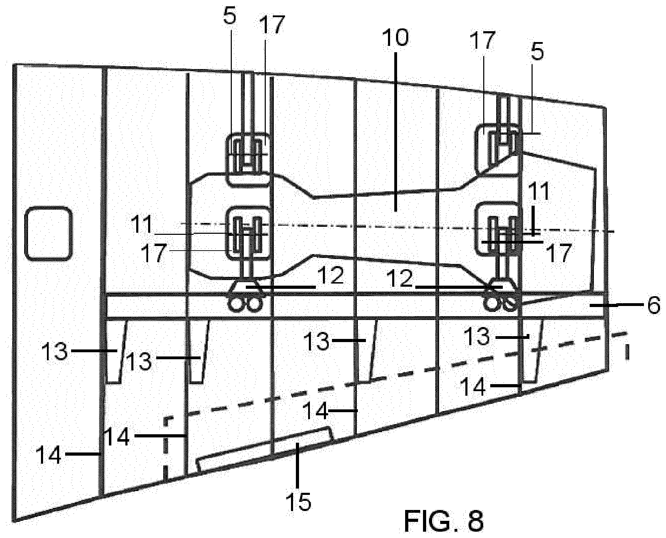

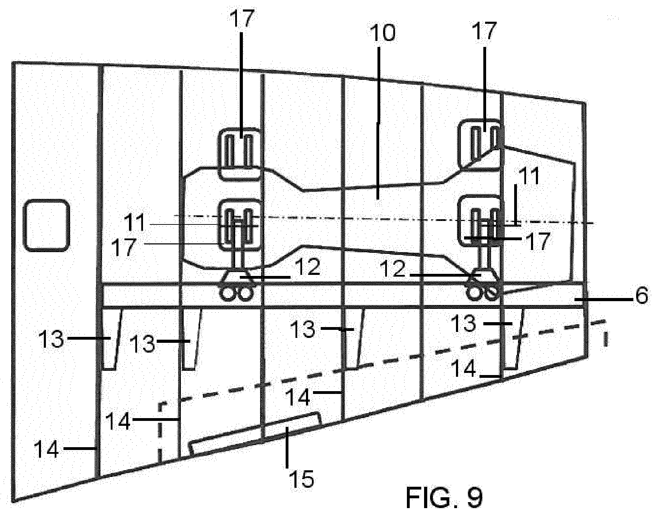

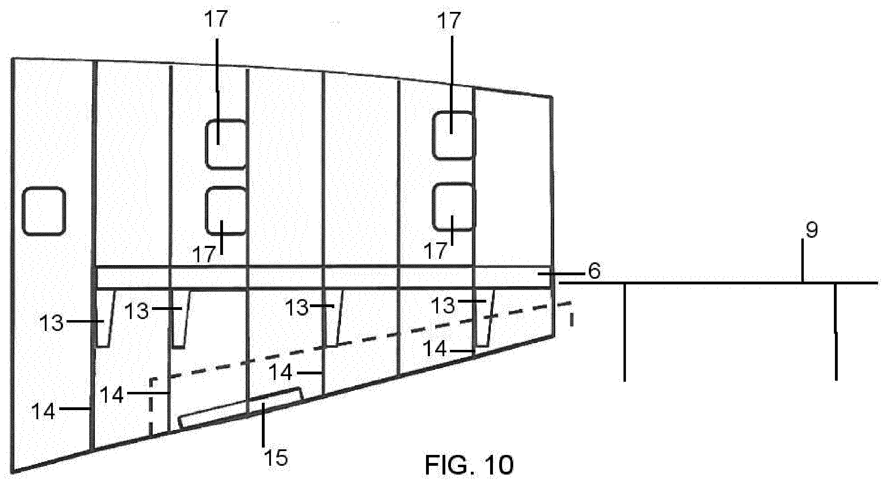

In another aspect, a method for rearward dismounting an engine 10 placed horizontally from an aircraft 1 of the invention as previously described comprises the following steps:
- removing the tailcone 3 or a fairing from the rear part 4 of the aircraft 1 (Fig. 6),
- entering the longitudinal detachable rails 6 into the rear part 4 of the aircraft 1, and placing the longitudinal detachable rails 6 on the internal supports 13 and under the engine 10 (Fig. 7),
- entering the sliding means 12 into the rear part 4 of the aircraft 1, placing the sliding means 12 on the longitudinal detachable rails 6, and attaching the sliding means 12 to the engine 10 by means of second removable attachment means 11 (Fig. 8),
- disengaging the engine 10 from the rear part 4 of the aircraft 1 by detaching the first attachment means 5 (Fig. 9),
- rearward sliding of the sliding means 12 and the engine 10 on the longitudinal detachable rails 6 (Fig. 10),
- transfering the engine 10 onto an external fork-lift or trolley 9, and
- disengaging the engine 10 from the sliding means 12 by detaching the second removable attachment means 11.

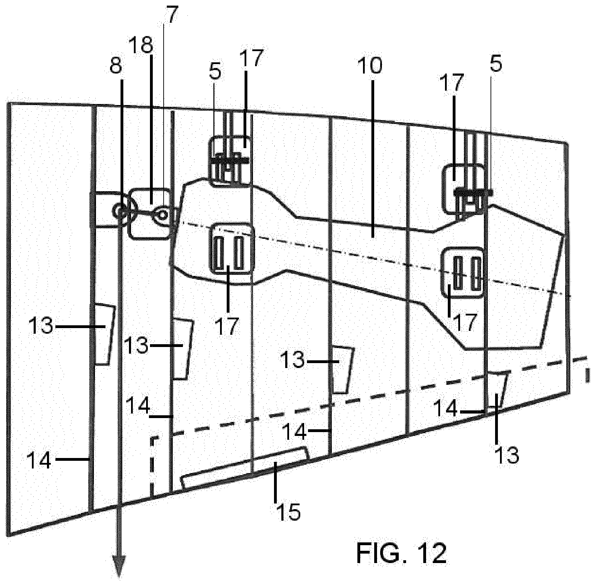

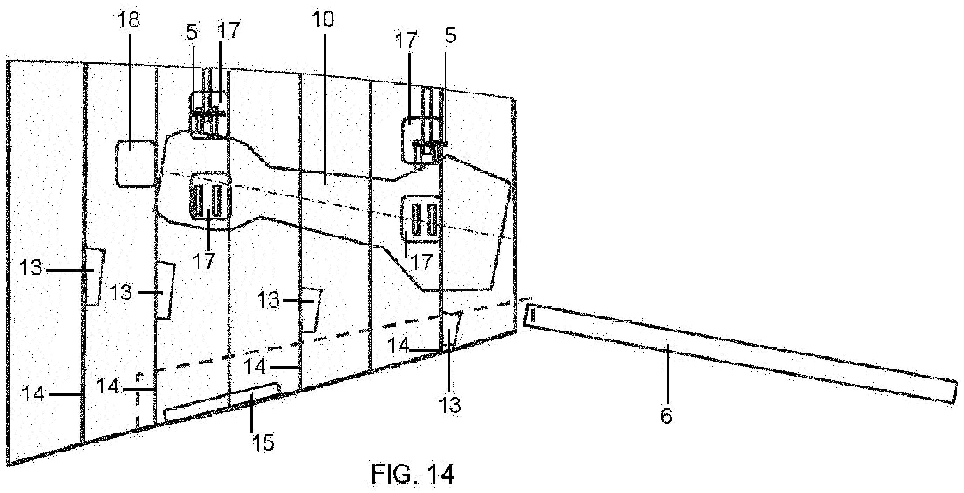

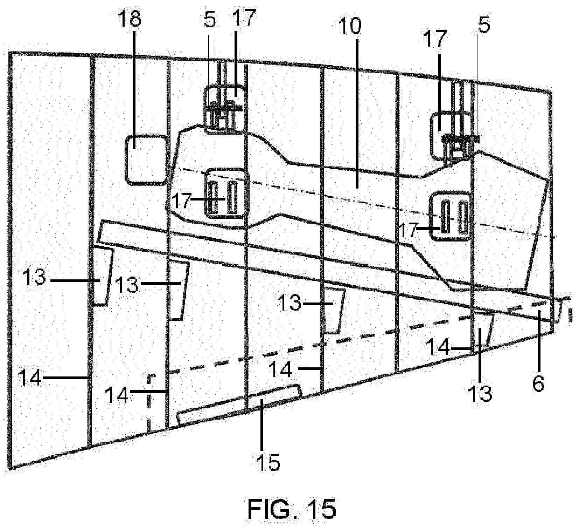

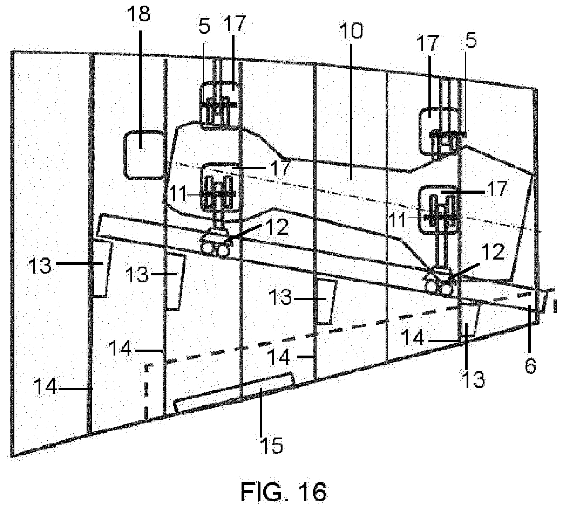

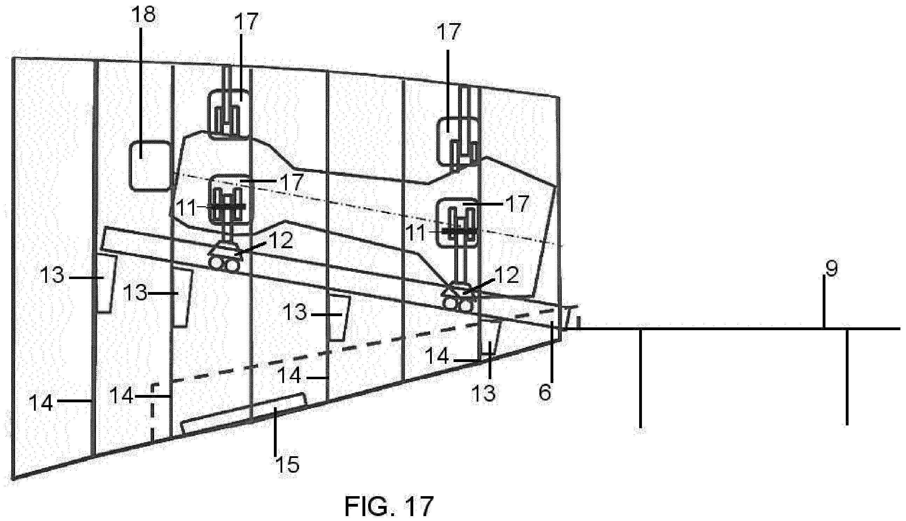

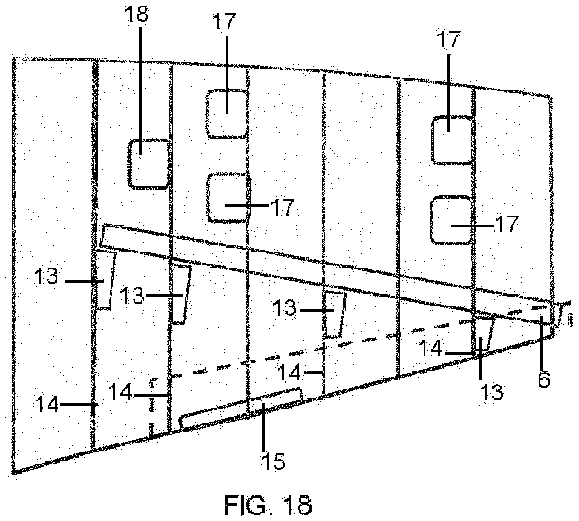

A method for rearward dismounting an engine 10 placed at an angle with respect to the ground from an aircraft 1 of the invention as previously described comprises the following steps:
- removing the tailcone 3 or a fairing from the rear part 4 of the aircraft 1 (Fig. 12),
- entering the longitudinal detachable rails (6) into the rear part (4) of the aircraft (1), and placing the longitudinal detachable rails (6) on the internal supports (13) and under the engine (10) (Figs. 14 and 15),
- entering the sliding means (12) into the rear part (4) of the aircraft (1), placing the sliding means (12) on the longitudinal detachable rails (6), and attaching the sliding means (12) to the engine (10) by means of second removable attachment means (11) (Fig. 16),
- disengaging the engine (10) from the rear part (4) of the aircraft (1) by detaching the first attachment means (5) (Fig. 17),
- rearward sliding of the sliding means (12) and the engine (10) on the longitudinal detachable rails (6), controlled by the pulley (8) (Fig. 18),
- transferring the engine (10) onto an external fork-lift or trolley (9),
- detaching the pulley (8) from the attachment points (7) at the front of the engine (10), and
- disengaging the engine (10) from the sliding means (12) by detaching the second removable attachment means (11).

The pulley 8 allows the controlled displacement of the engine 10 over the longitudinal detachable rails 6 until the engine 10 is placed on a typical maintenance fork-lift or trolley 9.

When the engine 10 is placed at an angle with respect to the ground, the pulley 8 restrains the movement of the engine 10 in a longitudinal direction before the attachment means 5 are detached and afterwards it allows the rearward sliding of the engine 10 in a controlled manner.

Although the present invention has been fully described in connection with preferred embodiments, it is evident that modifications may be introduced within the scope thereof, not considering this as limited by these embodiments, but by the contents of the following claims.

## Claims

1. Aircraft (1) with a system for rearward mounting and dismounting an engine (10), the engine (10) being placed inside the rear part (4) of the aircraft (1) when mounted, the system for rearward mounting and dismounting the engine (10) comprising:
- first removable attachment means (5) arranged to attach the engine (10) to the fuselage (2) in the rear part (4) of the aircraft (1),
- internal supports (13) fixed in the rear part (4) of the aircraft (1),
- at least two longitudinal detachable rails (6), to be placed on the internal supports (13) and under the engine (10), and
- sliding means (12) with second removable attachment means (11),
the fuselage (2) comprising windows (17) for accessing the first removable attachment means (5) and the second removable attachment means (11),
**characterized in that** the sliding means (12) are configured to be entered into the rear part (4) of the aircraft (1), to be placed on the longitudinal detachable rails (6) and to be attached to the engine by means of the second removable attachment means (11).

2. Aircraft (1) with a system for rearward mounting and dismounting an engine (10) according to claim 1, wherein the internal supports (13) are fixed to bulkheads (14) inside the rear part (4) of the aircraft (1).

3. Aircraft (1) with a system for rearward mounting and dismounting an engine (10) according to any of claims 1 to 2, wherein the engine (10) is placed horizontally when the aircraft (1) is on the ground.

4. Aircraft (1) with a system for rearward mounting and dismounting an engine (10) according to any of claims 1 to 2, wherein the engine (10) is placed at an angle with respect to the ground when the aircraft (1) is on the ground, and comprises attachment points (7) at the front of the engine (10), the system for rearward mounting and dismounting the engine (10) additionally comprising a pulley (8) attached to the rear part (4) of the aircraft (1) and connected to the attachment points (7) at the front of the engine (10) to allow the sliding of the engine (10) on the detachable rails (6) in a controlled manner.

5. Aircraft (1) with a system for rearward mounting and dismounting an engine (10) according to claim 4, wherein the pulley (8) is an electrical pulley.

6. Aircraft (1) with a system for rearward mounting and dismounting an engine (10) according to any of claims 4 to 5, wherein the fuselage (2) comprises a window (18) for accessing the attachment points (7) at the front of the engine (10) when the engine (10) is mounted.

7. Method for rearward dismounting an engine (10) placed horizontally from an aircraft (1) of any of claims 1 to 3, that comprises the following steps:
- removing the tailcone (3) or a fairing from the rear part (4) of the aircraft (1),
- entering the longitudinal detachable rails (6) into the rear part (4) of the aircraft (1), and placing the longitudinal detachable rails (6) on the internal supports (13) and under the engine (10),
- entering the sliding means (12) into the rear part (4) of the aircraft (1), placing the sliding means (12) on the longitudinal detachable rails (6), and attaching the sliding means (12) to the engine (10) by means of second removable attachment means (11),
- disengaging the engine (10) from the rear part (4) of the aircraft (1) by detaching the first attachment means (5),
- rearward sliding of the sliding means (12) and the engine (10) on the longitudinal detachable rails (6),
- transferring the engine (10) onto an external fork-lift or trolley (9), and
- disengaging the engine (10) from the sliding means (12) by detaching the second removable attachment means (11).

8. Method for rearward dismounting an engine (10) placed at an angle with respect to the ground from an aircraft (1) of claim 6, that comprises the following steps:
- attaching the pulley (8) to the engine (10) through the window (18),
- removing the tailcone (3) or a fairing from the rear part (4) of the aircraft (1),
- entering the longitudinal detachable rails (6) into the rear part (4) of the aircraft (1), and placing the longitudinal detachable rails (6) on the internal supports (13) and under the engine (10),
- entering the sliding means (12) into the rear part (4) of the aircraft (1), placing the sliding means (12) on the longitudinal detachable rails (6), and attaching the sliding means (12) to the engine (10) by means of second removable attachment means (11),
- disengaging the engine (10) from the rear part (4) of the aircraft (1) by detaching the first attachment means (5),
- rearward sliding of the sliding means (12) and the engine (10) on the longitudinal detachable rails (6), controlled by the pulley (8),
- transferring the engine (10) onto an external fork-lift or trolley (9),
- detaching the pulley (8) from the attachment points (7) at the front of the engine (10), and
- disengaging the engine (10) from the sliding means (12) by detaching the second removable attachment means (11).

## Patentansprüche

1. Luftfahrzeug (1) mit einem System für eine rückwärtige Montage und Demontage eines Motors (10), wobei der Motor (10) im montierten Zustand im hinteren Teil (4) des Luftfahrzeugs (1) platziert ist, wobei das System für die rückwärtige Montage und Demontage des Motors (10) umfasst:
- erste entfernbare Befestigungsmittel (5), die dazu angeordnet sind, den Motor (10) am Rumpf (2) im hinteren Teil (4) des Luftfahrzeugs (1) zu befestigen,
- interne Stützen (13), die im hinteren Teil (4) des Luftfahrzeugs (1) fixiert sind,
- mindestens zwei abnehmbare Längsschienen (6), die an den internen Stützen (13) und unter dem Motor (10) platziert werden, und
- Verschiebemittel (12) mit zweiten entfernbaren Befestigungsmitteln (11),
wobei der Rumpf (2) Fenster (17) zum Zugreifen auf die ersten entfernbaren Befestigungsmittel (5) und die zweiten entfernbaren Befestigungsmittel (11) umfasst,
**dadurch gekennzeichnet, dass** die Verschiebemittel (12) dazu ausgelegt sind, in den hinteren Teil (4) des Luftfahrzeugs (1) eingebracht zu werden, an den abnehmbaren Längsschienen (6) platziert zu werden und an dem Motor mittels der zweiten entfernbaren Befestigungsmittel (11) befestigt zu werden.

2. Luftfahrzeug (1) mit einem System für eine rückwärtige Montage und Demontage eines Motors (10) nach Anspruch 1, wobei die internen Stützen (13) an Trennwänden (14) im hinteren Teil (4) des Luftfahrzeugs (1) fixiert sind.

3. Luftfahrzeug (1) mit einem System für eine rückwärtige Montage und Demontage eines Motors (10) nach einem der Ansprüche 1 bis 2, wobei der Motor (10) horizontal platziert ist, wenn sich das Luftfahrzeug (1) am Boden befindet.

4. Luftfahrzeug (1) mit einem System für eine rückwärtige Montage und Demontage eines Motors (10) nach einem der Ansprüche 1 bis 2, wobei der Motor (10) in einem Winkel in Bezug auf den Boden platziert ist, wenn sich das Luftfahrzeug (1) am Boden befindet, und Befestigungspunkte (7) an der Vorderseite des Motors (10) umfasst, wobei das System für die rückwärtige Montage und Demontage des Motors (10) zusätzlich eine Riemenscheibe (8) umfasst, die am hinteren Teil (4) des Luftfahrzeugs (1) befestigt und mit den Befestigungspunkten (7) an der Vorderseite des Motors (10) verbunden ist, um das Verschieben des Motors (10) auf den abnehmbaren Schienen (6) auf eine gesteuerte Weise zu ermöglichen.

5. Luftfahrzeug (1) mit einem System für eine rückwärtige Montage und Demontage eines Motors (10) nach Anspruch 4, wobei die Riemenscheibe (8) eine elektrische Riemenscheibe ist.

6. Luftfahrzeug (1) mit einem System für eine rückwärtige Montage und Demontage eines Motors (10) nach einem der Ansprüche 4 bis 5, wobei der Rumpf (2) ein Fenster (18) zum Zugreifen auf die Befestigungspunkte (7) an der Vorderseite des Motors (10) im montierten Zustand des Motors (10) umfasst.

7. Verfahren für eine rückwärtige Demontage eines Motors (10), der horizontal von einem Luftfahrzeug (1) nach einem der Ansprüche 1 bis 3 platziert ist, das die folgenden Schritte umfasst:
- Entfernen des Heckkonus (3) oder einer Verkleidung vom hinteren Teil (4) des Luftfahrzeugs (1),
- Einbringen der abnehmbaren Längsschienen (6) in den hinteren Teil (4) des Luftfahrzeugs (1) und Platzieren der abnehmbaren Längsschienen (6) an den internen Stützen (13) und unter dem Motor (10),
- Einbringen der Verschiebemittel (12) in den hinteren Teil (4) des Luftfahrzeugs (1), Platzieren der Verschiebemittel (12) an den abnehmbaren Längsschienen (6) und Befestigen der Verschiebemittel (12) an dem Motor (10) mittels zweiter entfernbarer Befestigungsmittel (11),
- Lösen des Motors (10) vom hinteren Teil (4) des Luftfahrzeugs (1) durch Abnehmen der ersten Befestigungsmittel (5),
- Verschieben der Verschiebemittel (12) und des Motors (10) auf den abnehmbaren Längsschienen (6) nach hinten,
- Transferieren des Motors (10) auf einen externen Gabelstapler oder Transportwagen (9), und
- Lösen des Motors (10) von den Verschiebemitteln (12) durch Abnehmen der zweiten entfernbaren Befestigungsmittel (11).

8. Verfahren für eine rückwärtige Demontage eines Motors (10), der in einem Winkel in Bezug auf den Boden von einem Luftfahrzeug (1) nach Anspruch 6 platziert ist, das die folgenden Schritte umfasst:
- Befestigen der Riemenscheibe (8) an dem Motor (10) durch das Fenster (18),
- Entfernen des Heckkonus (3) oder einer Verkleidung vom hinteren Teil (4) des Luftfahrzeugs (1),
- Einbringen der abnehmbaren Längsschienen (6) in den hinteren Teil (4) des Luftfahrzeugs (1) und Platzieren der abnehmbaren Längsschienen (6) an den internen Stützen (13) und unter dem Motor (10),
- Einbringen der Verschiebemittel (12) in den hinteren Teil (4) des Luftfahrzeugs (1), Platzieren der Verschiebemittel (12) an den abnehmbaren Längsschienen (6) und Befestigen der Verschiebemittel (12) an dem Motor (10) mittels zweiter entfernbarer Befestigungsmittel (11),
- Lösen des Motors (10) vom hinteren Teil (4) des Luftfahrzeugs (1) durch Abnehmen der ersten Befestigungsmittel (5),
- Verschieben der Verschiebemittel (12) und des Motors (10) auf den abnehmbaren Längsschienen (6) nach hinten, gesteuert durch die Riemenscheibe (8),
- Transferieren des Motors (10) auf einen externen Gabelstapler oder Transportwagen (9),
- Abnehmen der Riemenscheibe (8) von den Befestigungspunkten (7) an der Vorderseite des Motors (10), und
- Lösen des Motors (10) von den Verschiebemitteln (12) durch Abnehmen der zweiten entfernbaren Befestigungsmittel (11).

## Revendications

1. Aéronef (1) avec un système pour montage et démontage d'un moteur (10) par l'arrière, le moteur (10) étant placé à l'intérieur de la partie arrière (4) de l'aéronef (1) lorsqu'il est monté, le système pour montage et démontage du moteur (10) par l'arrière comprenant :
- des premiers moyens d'assemblage amovibles (5) agencés pour assembler le moteur (10) au fuselage (2) dans la partie arrière (4) de l'aéronef (1),
- des supports internes (13) fixés dans la partie arrière (4) de l'aéronef (1),
- au moins deux rails longitudinaux, pouvant être désassemblés, (6) destinés à être placés sur les supports internes (13) et sous le moteur (10), et
- des moyens coulissants (12) avec des seconds moyens d'assemblage amovibles (11),
le fuselage (2) comprenant des fenêtres (17) pour accéder aux premiers moyens d'assemblage amovibles (5) et aux seconds moyens d'assemblage amovibles (11),
**caractérisé en ce que** les moyens coulissants (12) sont configurés pour les faire entrer dans la partie arrière (4) de l'aéronef (1), pour être placés sur les rails longitudinaux, pouvant être désassemblés, (6) et pour être assemblés au moteur par le biais des seconds moyens d'assemblage amovibles (11).

2. Aéronef (1) avec un système pour montage et démontage d'un moteur (10) par l'arrière selon la revendication 1, dans lequel les supports internes (13) sont fixés à des cloisons (14) à l'intérieur de la partie arrière (4) de l'aéronef (1).

3. Aéronef (1) avec un système pour montage et démontage d'un moteur (10) par l'arrière selon l'une quelconque des revendications précédentes 1 et 2, dans lequel le moteur (10) est placé horizontalement lorsque l'aéronef (1) est sur le sol.

4. Aéronef (1) avec un système pour montage et démontage d'un moteur (10) par l'arrière selon l'une quelconque des revendications précédentes 1 et 2, dans lequel le moteur (10) est placé à un angle par rapport au sol lorsque l'aéronef (1) est sur le sol, et comprend des points d'assemblage (7) à l'avant du moteur (10), le système pour montage et démontage du moteur (10) par l'arrière comprenant de plus une poulie (8) assemblée à la partie arrière (4) de l'aéronef (1) et raccordée aux points d'assemblage (7) à l'avant du moteur (10) pour permettre le coulissement du moteur (10) sur les rails, pouvant être désassemblés, (6), de manière commandée.

5. Aéronef (1) avec un système pour montage et démontage d'un moteur (10) par l'arrière selon la revendication 4, dans lequel la poulie (8) est une poulie électrique.

6. Aéronef (1) avec un système pour montage et démontage d'un moteur (10) par l'arrière selon l'une quelconque des revendications précédentes 4 et 5, dans lequel le fuselage (2) comprend une fenêtre (18) pour accéder aux points d'assemblage (7) à l'avant du moteur (10) lorsque le moteur (10) est monté.

7. Procédé pour le démontage d'un moteur (10) par l'arrière, le moteur étant placé horizontalement, à partir d'un aéronef (1) de l'une quelconque des revendications précédentes 1 à 3, qui comprend les étapes suivantes :
- l'enlèvement du cône arrière (3) ou d'un carénage à partir de la partie arrière (4) de l'aéronef (1),
- l'entrée les rails longitudinaux, pouvant être désassemblés, (6) dans la partie arrière (4) de l'aéronef (1), et le placement des rails longitudinaux, pouvant être désassemblés, (6) sur les supports internes (13) et sous le moteur (10),
- l'entrée des moyens coulissants (12) dans la partie arrière (4) de l'aéronef (1), le placement des moyens coulissants (12) sur les rails longitudinaux, pouvant être désassemblés, (6) et l'assemblage des moyens coulissants (12) au moteur (10) par le biais de seconds moyens d'assemblage amovibles (11),
- la séparation du moteur (10) à partir de la partie arrière (4) de l'aéronef (1) en désassemblant les premiers moyens d'assemblage (5),
- le coulissement, vers l'arrière, des moyens coulissants (12) et du moteur (10) sur les rails longitudinaux, pouvant être désassemblés, (6)
- le transfert du moteur (10) sur un chariot élévateur à fourche ou chariot (9), et
- la séparation du moteur (10) à partir des moyens coulissants (12) en désassemblant les seconds moyens d'assemblage amovibles (11).

8. Procédé pour le démontage d'un moteur (10) par l'arrière, le moteur étant placé à un angle par rapport au sol, à partir d'un aéronef (1) de la revendication 6, qui comprend les étapes suivantes :
- l'assemblage de la poulie (8) au moteur (10) à travers la fenêtre (18),
- l'enlèvement du cône arrière (3) ou d'un carénage à partir de la partie arrière (4) de l'aéronef (1),
- l'entrée des rails longitudinaux, pouvant être désassemblés, (6) dans la partie arrière (4) de l'aéronef (1), et le placement des rails longitudinaux, pouvant être désassemblés, (6) sur les supports internes (13) et sous le moteur (10),
- l'entrée des moyens coulissants (12) dans la partie arrière (4) de l'aéronef (1), le placement des moyens coulissants (12) sur les rails longitudinaux, pouvant être désassemblés, (6) et l'assemblage des moyens coulissants (12) au moteur (10) par le biais de seconds moyens d'assemblage amovibles (11),
- la séparation du moteur (10) à partir de la partie arrière (4) de l'aéronef (1) en désassemblant les premiers moyens d'assemblage (5),
- le coulissement, vers l'arrière, des moyens coulissants (12) et du moteur (10) sur les rails longitudinaux, pouvant être désassemblés, (6), commandé par la poulie (8),
- le transfert du moteur (10) sur un chariot élévateur à fourche ou chariot (9),
- le désassemblage de la poulie (8) à partir des points d'assemblage (7) à l'avant du moteur (10), et
- la séparation du moteur (10) à partir des moyens coulissants (12) en désassemblant les seconds moyens d'assemblage amovibles (11).
